# EUROPÄISCHE PATENTSCHRIFT

(11) **EP 2 707 544 B1**
(45) Veröffentlichungstag und Bekanntmachung des Hinweises auf die Patenterteilung: **08.07.2015**
(21) Anmeldenummer: 12721511.9
(22) Anmeldetag: 14.05.2012
(51) Int. Cl.: D21F 3/10

(54) **DICHTUNGSANORDNUNG**
SEAL ASSEMBLY
SYSTEME D'ETANCHEITE

(30) Priorität: 13.05.2011 DE 102011075806
(43) Veröffentlichungstag der Anmeldung: 19.03.2014
(73) Patentinhaber: Voith Patent GmbH, 89522 Heidenheim (DE)
(72) Erfinder: SCHOTGE, Peer, 89522 Heidenheim (DE); BERGER, Susanne, 89542 Herbrechtingen (DE); HERMANN, Klaus, 89537 Giengen (DE); SCHÄFER, Andreas, 89518 Heidenheim (DE); GRONYCH, Daniel, 89522 Heidenheim (DE)
(86) Internationale Anmeldenummer: PCT/EP2012/058874
(87) Internationale Veröffentlichungsnummer: WO 2012/168034

(56) Entgegenhaltungen:
- DE-A1-102004 059 028
- DE-A1-102009 000 371
- GB-A- 732 554

## Beschreibung

Die Erfindung betrifft eine Dichtungsanordnung zur Abdichtung wenigstens einer an eine in einer Bewegungsrichtung bewegte und perforierte Fläche angrenzenden Unterdruck- oder Überdruckzone in einer Papier-, Tissue- oder Kartonmaschine, mit wenigstens einem der bewegten Fläche gegenüberliegenden Dichtelement, das in einer zur Formatveränderung der Unterdruck- oder Überdruckzone bewegbaren Aufnahme angeordnet ist.

Derartige Dichtungsanordnungen finden in der Praxis sowohl in der Formerpartie als auch in der Pressenpartie und/oder der Trockenpartie einer jeweiligen Papiermaschine Verwendung, wo sie u.a. in Saugwalzen oder Blaswalzen eingesetzt sein können.

Im Folgenden wird die Erfindung für eine Saugwalze näher erläutert, sie soll aber nicht auf Saugwalzen beschränkt sein. Derartige Saugwalzen können beispielsweise als Abnahmesaugwalze oder als Saugleitwalze eingesetzt werden. Es gibt Anwendungen, in denen die Papier-, Tissueoder Kartonbahn - im Folgenden kurz Bahn genannt - mit oder ohne Unterstützung von Sieben oder Filzen läuft. Die Saugwalzen besitzen in der Regel feststehende innere Saugkästen, die z. B. verstellbare Zonen mit wenigstens einem Druckniveau bilden. Die Abdichtung der Druckoder Vakuumzonen in Sieblaufrichtung und in axialer Richtung erfolgt durch, Dichtelemente, die, falls positionierbar, in verstellbaren Aufnahmen, beispielsweise sogenannten "Formatschiebern", gelagert sein können. Die bewegte Fläche entspricht in diesem Fall der Innenfläche des Walzenmantels und ist in der Regel kreisförmig gekrümmt.

Die Dichtelemente, wegen ihrer langgestreckten Form auch Dichtleisten genannt, kontaktieren am Rand einer Über- oder Unterdruckzone den Walzenmantel sowohl in axialer als auch in Unfangsrichtung und dichten die Zone dadurch ab. Über Saugbohrungen im Walzenmantel wird die Bahn im Umfangsbereich der Unterdruckzone am Walzenumfang gehalten. Oft dient die Saugkammer gleichzeitig dazu, Feuchtigkeit aus der Bahn herauszuziehen.

Aus der DE 10 2009 000 371 A1 geht eine Saugwalze hervor, deren Saugkastenformat sowohl durch axial als auch in Umfangsrichtung verstellbare, seitlich die Saugzone begrenzende Aufnahmen der Dichtelemente veränderbar ist.

Um bei den Papier-, Tissue- oder Kartonmaschinen einen hohen Laufzeit-Wirkungsgrad zu erzielen, ist es unter anderem wichtig, für einen stabilen Bahnlauf zu sorgen. Dennoch kommt es gerade bei vielen, insbesondere grafischen Papiermaschinen beispielsweise in der Pressenpartie zu Bahnlaufproblemen. So offenbaren sich nach der Filztrennung, also dem Abheben des Filzes an einer Bahnseite, ein unruhiger Papierrand oder sogar Randaufsteher, also ein Abheben des Papierbahnrandes vom Filz.

Es zeigte sich in Versuchen, dass die Einstellung der Bahnbesaugung bei den Saugwalzen, besonders bei der Saugfilzleitwalze, einen signifikanten Einfluss auf das Randverhalten des Papiers hat. Um für einen optimalen Vakuumaufbau zum Papier zu sorgen, gibt es bei den Saugfilzleitwalzen und den Pick-up-Walzen müssen die "Formatschieber", insbesondere quer zur Bahnlaufrichtung, also axial, genau eingestellt werden.

In den derzeit laufenden Maschinen ist jedoch die genaue Position des Formatschiebers im Verhältnis zur Papierkante nicht bekannt, da die Einstellung der Bahnbreite in einem zeitlich früheren Herstellbereich, am Former (Randsäumung) erfolgt und in keinem direkten Zusammenhang mit der Einstellung des Formatschiebers steht. Um die Position herauszufinden, muss die Bahnkante im Verhältnis zu einem Fixpunkt der Walze (z. B. Walzenkante) bestimmt werden. Danach muss die relative Entfernung des Formatschiebers zur Papierkante mittels der geometrischen Konstruktionsdaten der Walze ermittelt werden. Dieser Vorgang ist zeitaufwendig und zugleich umständlich. Folgen im Laufe eines Filzlebens Anpassungen der Randbesäumung, ändert sich die Papierbahnbreite und die relativen Formatschieberpositionen werden zunehmend undurchsichtig, wenn nicht sofort auf die Anpassung reagiert wird.

Es ist daher die Aufgabe der Erfindung, die Einstellbarkeit der Aufnahme zur Positionierung des Dichtelements zu vereinfachen.

Die Aufgabe wird dadurch gelöst, dass ein direkt oder indirekt mit dem Dichtelement verbundener Signalgeber vorhanden ist, dessen Signal auf der dem Dichtelement abgewandten Seite der bewegten Fläche empfangbar ist.

Der Ausdruck "direkt oder indirekt" sollen hier aussagen, dass der Signalgeber unmittelbar mit dem Dichtelement oder seiner Aufnahme verbunden ist oder aber noch weiter Bauteile, beispielweise ein Gestänge, dazwischen angeordnet sein kann. Auf jeden Fall soll aber mit einem Versetzen des Dichtelementes bzw. seiner Aufnahme auch der Signalgeber bewegt werden.

Dass das Signal auf der dem Dichtelement abgewandten Seite der bewegten Fläche empfangbar ist, hat viele Vorteile. Im Folgenden sei dieser Sachverhalt weiter am Beispiel einer Saugwalze beschrieben. Die bewegte Fläche entspricht hier der Innenwandung eines perforierten Saugwalzenmantels. Ist der Signalgeber mit dem Dichtelement verbunden, gibt er genau die augenblickliche Position des Dichtelementes an, welche dadurch gemäß der Erfindung auch außerhalb des Walzenmantels bestimmbar ist.

Dichtelemente, wie sie für die Erfindung Verwendung finden könnten, sind bekannt. Sie bestehen beispielsweise aus leistenförmigem Gummigraphit oder aus faserverstärkten Duroplasten.

Der Begriff Signal ist weit zu fassen. Das Signal kann durch elektromagnetische Strahlung, akustische Schallgeber, aber auch Fluidströmungen erfolgen. Wichtig ist, dass es durch den Walzenmantel, insbesondere die Perforation hindurchtreten kann und von außerhalb der Walze empfangbar ist.

Bevorzugt ist, wenn der Signalgeber wenigstens eine Lichtquelle ist. Der Signalgeber ist dadurch ein kostengünstiges und einfaches Bauteil. Der Lichtstrahl, also das Signal, kann durch die Perforation hindurchtreten und kann mit dem menschlichen Auge ohne technische Empfänger erfasst werden.

Besonders bevorzugt ist, wenn die Lichtquelle durch einen Laser gebildet ist. Die hohe Intensität des Lichtstrahls und seine Bündelung haben den Vorteil, den Ort des Laser innerhalb der Walze Micrometer-genau erkennen zu können, und damit auch die Position des mit ihm verbundenen Dichtelementes genau bestimmbar zu machen. Die hohe Intensität des Lichtstrahls und seine Bündelung bieten - wie in Versuchen gezeigt wurde - weiterhin den großen Vorteil, dass das Licht nicht nur durch deutlich durch die Perforation, sondern auch durch die Bahn und sogar durch einen eventuell vorhandenen Filz sichtbar ist. Damit sind beispielsweise eine Bahnkante und ein im Umfangsrichtung verlaufendes Dichtelement präzise aufeinander abstimmbar.

Es ist von Vorteil, wenn der Signalgeber innerhalb des Dichtelementes angeordnet ist. Auf diese Weise ist die genaue Position des Dichtelementes direkt und ohne relative Abstände bestimmbar.

Vorzugsweise ist eine Bohrung im Dichtelement vorgesehen, durch die das Signal austreten kann. Der Signalgeber kann also in einer gewissen Tiefe im Dichtelement untergebracht werden. Dies ist vorteilhaft, weil der darüberliegende Teil in der Regel einem Verschleiß durch Reibung an der Mantelinnenwand unterworfen ist. Der Signalgeber liegt also in einem geschützten Bereich.

Bevorzugt ist zumindest die Bohrung mit einem signaldurchlässigen Material gefüllt. Dadurch wird vermieden, dass die Bohrung sich mit Abrieb oder anderem Schmutz zusetzt. Im Fall, wo der Signalgeber eine Lichtquelle ist, könnte man hier beispielsweise ein transparentes Kunstglas verwenden. Durch das Wort "zumindest" sei hier angedeutet, das auch das gesamte Dichtelement aus einem signaldurchlässigen Material bestehen könnte.

Alternativ dazu ist es von Vorteil, die Bohrung mit einer Spüleinrichtung zu versehen. Beispielsweise könnte ein Anschluss für eine Wasserzufuhr vorgesehen sein. Diese Spülung brächte noch den weiteren Vorteil mit sich, dass der Spalt am Dichtelement zum Mantel hin dadurch geschmiert und der Verschleiß am Dichtelement vermindert würde.

Bevorzugt ist die Aufnahme durch einen Stellmotor bewegbar. Ein solcher Stellmotor könnte ein elektrisch angetriebener Motor sein, der eine Spindel antreibt oder beispielsweise ein Hydraulik- oder Pneumatikzylinder. Dieser Stellmotor bietet den Vorteil, jederzeit die Nachstellung der Aufnahme vornehmen zu können, ohne dass eine manuelle Verstellung über eine üblicherweise eingesetzte, von außen zugängliche Spindel vorgenommen oder die Walze sogar geöffnet werden muss.

Mit Vorteil ist dafür gesorgt, dass das Signal des Signalgebers durch eine mit einem Microprozessor verbundene Empfangseinheit aufnehmbar ist. Dies könnte in dem Fall, wo der Signalgeber eine Lichtquelle ist, ein optischer Sensor sein. Auf diese Weise kann während der Produktion ständig überprüft werden, ob die gewünschte Position des Dichtelementes eingehalten wird. Ist das nicht der Fall, kann der Microprozessor eine Warnung herausgeben oder sogar über eine Steuerung eines Stellmotors an einer Aufnahme dafür sorgen, dass das Dichtelement die richtige Position anfährt. Zusätzlich kann ein versehentliches Einwickeln der Walze mit der Bahn überwacht werden, weil das empfangene Signal sich beim Einwickeln abschwächen oder schwanken würde.

Es ist von Vorteil, wenn der Signalgeber, die Empfangseinheit und der Stellmotor Mitglieder eines geschlossenen Regelkreises sind. Das Personal kann die Papiermaschine im Bereich der Saugwalze mit einem geeigneten Microprozessorprogramm, das die oberen Grenzwerte für den Abstand zwischen Bahnkante und Dichtelement in Abhängigkeit von der Papierqualität, der Feuchte oder dem Gewicht der Bahn oder weiteren Parametern ermittelt, dann automatisiert betreiben.

Selbstverständlich soll auch eine Dichtungsanordnung mit mehreren Signalgebern und ggf. entsprechend vielen Empfangseinheiten von der Erfindung abgedeckt sein. Es kann durchaus nützlich sein, beispielsweise aus Redundanzgründen die Dichtelemente mit mehreren Signalgebern auszurüsten. Außerdem können mehrere Signalgeber auch leichter beide Bahnkanten bzw. weitere Dichtelementpositionen berücksichtigen.

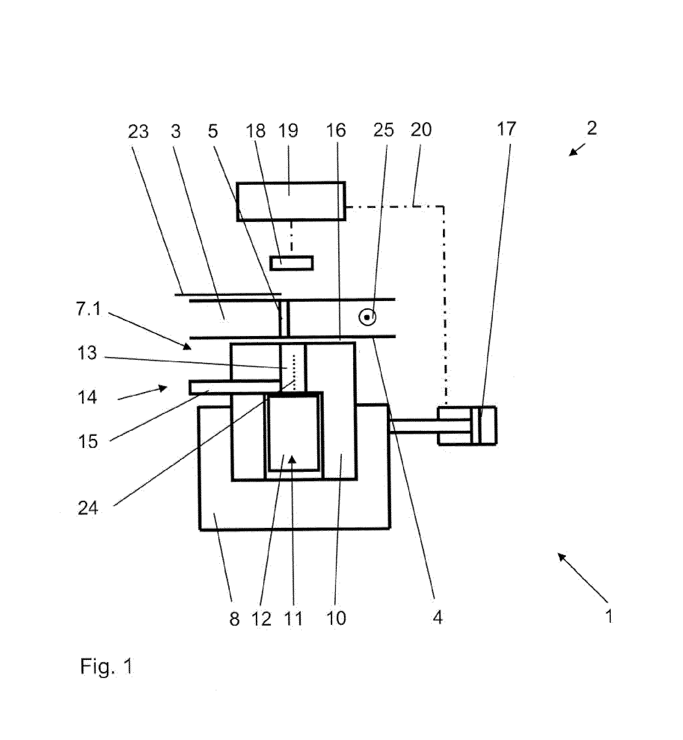

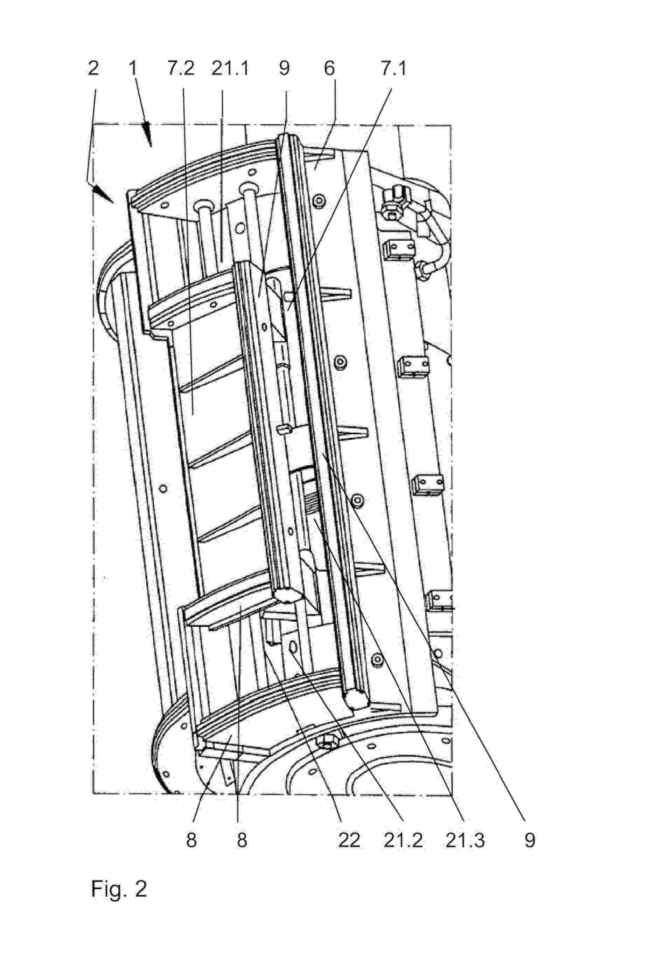

Die Erfindung wird im Folgenden anhand eines Ausführungsbeispiels unter Bezugnahme auf die Zeichnungen näher erläutert. In dieser zeigen Figur 1 ein schematisches Beispiel einer erfindungsgemäßen Ausgestaltung einer Dichtungsanordnung mit einem optischen Signalgeber, und die
Figur 2 einen dreidimensionalen Ausschnitt einer Saugwalze nach dem Stand der Technik, bei der der perforierte Mantel entfernt wurde.

Figur 2 dient der Erläuterung des der Erfing zugrunde liegenden Problems und zeigt das Innere einer Saugwalze 2 mit einer Dichtungsanordnung 1. Um den Träger 6, der alle im Betrieb nicht drehenden Teile umfasst, rotiert ein nicht dargestellter perforierter Mantel 3. An dem Träger 6 sind die Unterdruckzonen 7.1, 7.2 sowie sämtliche zuund abführende Leitungen sowie mechanische Stelleinrichtungen vorgesehen.

Die Saugwalze 34 umfasst eine erste, zumindest im Wesentlichen hufeisen- oder U-förmige Saugzone 7.1 mit zwei seitlichen, sich jeweils allgemein in Walzenumfangsrichtung erstreckenden Saugzonenabschnitten 21.1, 21.2 als Schenkel und einem mit diesen verbundenen, sich allgemein parallel zur Walzenachse erstreckenden Saugzonenabschnitt 21.3 . Diese erste Saugzone 7.1 kann insbesondere als Hochvakuumsaugzone vorgesehen sein.

Das in Axialrichtung gemessene Format ist über zwei seitliche, axial äußere bewegbare Aufnahmen 8 variabel einstellbar, die beispielsweise auf Stangen 22 gleichzeitig oder unabhängig voneinander verschiebbar sind. Die übrigen Aufnahmen sind feste Aufnahmen 9 für Dichtelemente 10.

Axial zwischen den beiden Saugzonenabschnitten 21.1 und 21.2 kann eine Haltezone 7.2 vorgesehen sein.

Wie aus der DE 10 2009 000 371 A1 bekannt, können weitere bewegbare Aufnahmen 8 vorgesehen werden, die hier nicht dargestellt sind. Diese können auch schwenkbar um die Walzenachse angeordnet sein, so dass man eine in Bewegungsrichtung 25 des Mantels unterschiedliche Länge einer Unterdruckzone 7,1, 7.1 realisieren kann.

Zudem kann in Umfangsrichtung betrachtet im Anschluss an die erste Saugzone 7.1 eine weitere Saugzone vorgesehen sein.

Bis hierhin entspricht die Beschreibung der Figur 1 einer Saugwalze 2 mit einer Dichtungsanordnung 1 nach dem Stand der Technik, bei man die Kante einer Bahn nicht unbedingt der Position eines Dichtelementes zuordnen kann.

Um die Erfindung zu erläutern, die diesen Mangel ausmerzt, muss nun die Figur 1 betrachtet werden, die schematisch die für die Erfindung wesentlichen Hauptbestandteile der Figur 2 übernommen hat und zudem die erfinderischen Merkmale darstellt.

Man erkennt die Dichtungsanordnung 1 mit dem in Bewegungsrichtung 25 (Pfeil aus der Blattebene herauszeigend) laufenden Mantel 3. Die Innenwand bildet die zu der Erfindung gehörende bewegte Fläche 4. Der Mantel 3 besitzt Saugbohrungen 5, von denen aus Gründen der Übersichtlichkeit nur eine dargestellt ist. Durch die Saugbohrungen wird die Bahn am äußeren Walzenmantel gehalten sowie Luft und Feuchtigkeit in die Unterdruckzone 7.1 gebracht.

Die bewegbare Aufnahme 8 ist rein schematisch U-förmig dargestellt. Sie hat ein aus Gummigraphit bestehendes Dichtelement 10 aufgenommen. Im unteren Bereich des Dichtelementes 10 ist eine Lichtquelle 12 in Form eines Lasers eingesetzt. Mittels der punktierten Linie soll der emittierte Lichtstrahl 24 angedeutet sein. (In anderen Ausführungsbeispielen könnte auch eine andere elektromagnetische Strahlung, ein Schall oder ein Partikelstrahl emitiert werden.) Durch den umlaufenden Mantel 3 tritt der Lichtstrahl periodisch, also immer bei gerade gegenüberliegender Saugbohrung, aus dem Mantel 3 heraus. Ein Beobachter weiß dadurch genau, wo sich das Dichtelement befindet und kann die Position in Bezug auf die Kante der Bahn 23 eruieren. Gegebenenfalls ist die Aufnahme 8 des Dichtelementes 10 leicht an den gewünschten Ort nachzujustieren. Dies geschieht vorzugweise über einen Stellmotor 17.

Dieser Prozess ist aber auch automatisier- und regelbar, wenn eine Empfangseinheit 18, (in diesem Ausführungsbeispiel, wo der Signalgeber 11 eine Lichtquelle 12 ist, also ein lichtempfindlicher Sensor), eingesetzt wird. Durch eine Microprozessoreinheit 19 können die Signale der Empfangseinheit 18 ausgewertet und entsprechende Stellbefehle an den Stellmotor 17 weitergegeben werden. Dazu sind die Signalleitungen 20 strichpunktiert angedeutet.

Der Laser 12 ist im unteren Bereich des Dichtelementes 10 angeordnet, um nicht vom Verschleiß an der bewegten Fläche 4 des Mantels 3 betroffen zu sein. Der Lichtstrahl tritt deswegen durch eine Bohrung 13. Die Bohrung 13 kann beispielweise mit einem Plexiglas, also einem das Signal, in diesem Fall das Licht durchlässigen Material gefüllt sein. Dadurch wird eine Verschmutzung der Bohrung 13 vermieden. Alternativ kann die Bohrung 13 auch mit einer Spüleinrichtung 14 versehen sein. Dabei wird beispielsweise Wasser über die Zuleitung 15 in die Bohrung gebracht, wo es im Dichtspalt 16 wieder austritt. Das hat den zusätzlichen positiven Effekt, dass eine hydrostatische Schmierung zwischen Dichtelement 10 und bewegter Fläche 4 aufgebaut wird.

### Bezugszeichenliste

- 1: Dichtungsanordnung
- 2: Saugwalze
- 3: Mantel
- 4: Bewegte Fläche
- 5: Saugbohrung
- 6: Träger
- 7.1, 7.2: Unterdruckzone (oder Überdruckzone)
- 8: Bewegbare Aufnahme
- 9: Feste Aufnahme
- 10: Dichtelement
- 11: Signalgeber
- 12: Lichtquelle, Laser
- 13: Bohrung im Dichtelement
- 14: Spüleinrichtung
- 15: Zuleitung
- 16: Dichtspalt
- 17: Stellmotor, Zylinder
- 18: Empfangseinheit, Sensor
- 19: Microprozessor
- 20: Signalleitung
- 21.1, 21.2, 21.3: Saugzonenabschnitt
- 22: Stange
- 23: Bahn
- 24: Lichtstrahl
- 25: Bewegungsrichtung

## Patentansprüche

1. Dichtungsanordnung zur Abdichtung wenigstens einer an eine in einer Bewegungsrichtung (25) bewegte und perforierte Fläche (4) angrenzenden Unterdruck- oder Überdruckzone (7) in einer Papier-, Tissue- oder Kartonmaschine, mit wenigstens einem der bewegten Fläche (4) gegenüberliegenden Dichtelement (10), das in einer zur Formatveränderung der Unterdruck- oder Überdruckzone (7) bewegbaren Aufnahme (8) angeordnet ist,
**dadurch gekennzeichnet, dass**
ein direkt oder indirekt mit dem Dichtelement (10) verbundener Signalgeber (11) vorhanden ist, dessen Signal auf der dem Dichtelement (10) abgewandten Seite der bewegten Fläche (4) empfangbar ist.

2. Dichtungsanordnung gemäß Anspruch 1, **dadurch gekennzeichnet, dass** der Signalgeber (11) wenigstens eine Lichtquelle (12) ist.

3. Dichtungsanordnung Anspruch 2, **dadurch gekennzeichnet, dass** die Lichtquelle (12) durch einen Laser gebildet ist.

4. Dichtungsanordnung gemäß einem der Ansprüche 1 bis 3, **dadurch gekennzeichnet, dass** der Signalgeber (11) innerhalb des Dichtelementes (10) angeordnet ist.

5. Dichtungsanordnung gemäß einem der Ansprüche 1 bis 4, **dadurch gekennzeichnet, dass** eine Bohrung (13) im Dichtelement vorgesehen ist, durch die das Signal austreten kann.

6. Dichtungsanordnung gemäß Anspruch 5, **dadurch gekennzeichnet, dass** zumindest die Bohrung (13) mit einem signaldurchlässigen Material gefüllt ist.

7. Dichtungsanordnung gemäß Anspruch 5, **dadurch gekennzeichnet, dass** die Bohrung (13) mit einer Spüleinrichtung (14) versehen ist.

8. Dichtungsanordnung gemäß einem der Ansprüche 1 bis 7, **dadurch gekennzeichnet, dass** die Aufnahme (8) durch einen Stellmotor (17) bewegbar ist.

9. Dichtungsanordnung gemäß einem der Ansprüche 1 bis 8, **dadurch gekennzeichnet, dass** das Signal des Signalgebers (11) durch eine mit einem Microprozessor (19) verbundene Empfangseinheit (18) aufnehmbar ist.

10. Dichtungsanordnung gemäß Anspruch 9, **dadurch gekennzeichnet, dass** der Signalgeber (11), die Empfangseinheit (18) und der Stellmotor (17) Mitglieder eines geschlossenen Regelkreises sind.

## Claims

1. Seal assembly for sealing at least one negative-pressure or positive-pressure zone (7), which is moved in a moving direction (25) and adjoins a perforated face (4), in a paper, tissue or cardboard-making machine, having at least one sealing element (10) which is opposite the moving face (4) and which is disposed in a movable receptacle (8) for changing the format of the negative-pressure or positive-pressure zone (7),
**characterized in that**
a signal generator (11), which is directly or indirectly connected to the sealing element (10) and the signal of which is receivable on that side of the moving face (4) that faces away from the sealing element (10), is provided.

2. Seal assembly according to Claim 1, **characterized in that** the signal generator (11) is at least a light source (12).

3. Seal assembly according to Claim 2, **characterized in that** the light source (12) is formed by a laser.

4. Seal assembly according to one of Claims 1 to 3, **characterized in that** the signal generator (11) is disposed within the sealing element (10).

5. Seal assembly according to one of Claims 1 to 4, **characterized in that** a bore (13) through which the signal can emerge is provided in the sealing element.

6. Seal assembly according to Claim 5, **characterized in that** at least the bore (13) is filled with a signal-permeable material.

7. Seal assembly according to Claim 5, **characterized in that** the bore (13) is provided with a rinsing installation (14).

8. Seal assembly according to one of Claims 1 to 7, **characterized in that** the receptacle (8) is movable by way of a servomotor (17).

9. Seal assembly according to one of Claims 1 to 8, **characterized in that** the signal of the signal generator (11) is receivable by a receiver unit (18) which is connected to a microprocessor (19).

10. Seal assembly according to Claim 9, **characterized in that** the signal generator (11), the receiver unit (18), and the servomotor (17) are elements of a closed control loop.

## Revendications

1. Système d'étanchéité pour étanchéifier au moins une zone de surpression ou de dépression (7) adjacente à une surface (4) perforée et mobile dans un sens de déplacement (25) dans une machine de papier, papier tissu ou carton, comprenant au moins un élément d'étanchéité (10) opposé à la surface (4) mobile, qui est disposé dans un logement (8) mobile pour modifier le format de la zone de surpression ou de dépression (7),
**caractérisé en ce qu'**un générateur de signal (11) relié directement ou indirectement à l'élément d'étanchéité (10) est présent, dont le signal peut être reçu sur le côté de la surface mobile (4) détourné de l'élément d'étanchéité (10).

2. Système d'étanchéité selon la revendication 1, **caractérisé en ce que** le générateur de signal (11) est au moins une source lumineuse (12).

3. Système d'étanchéité selon la revendication 2, **caractérisé en ce que** la source lumineuse (12) est formée par un laser.

4. Système d'étanchéité selon l'une des revendications 1 à 3, **caractérisé en ce que** le générateur de signal (11) est disposé à l'intérieur de l'élément d'étanchéité (10).

5. Système d'étanchéité selon l'une des revendications 1 à 4, **caractérisé en ce qu'**un perçage (13) est prévu dans l'élément d'étanchéité, au travers duquel le signal peut sortir.

6. Système d'étanchéité selon la revendication 5, **caractérisé en ce qu'**au moins le perçage (13) est rempli d'un matériau laissant passer le signal.

7. Système d'étanchéité selon la revendication 5, **caractérisé en ce que** le perçage (13) est doté d'un dispositif de rinçage (14).

8. Système d'étanchéité selon l'une des revendications 1 à 7, **caractérisé en ce que** le logement (8) peut être déplacé par un servomoteur (17).

9. Système d'étanchéité selon l'une des revendications 1 à 8, **caractérisé en ce que** le signal du générateur de signal (11) peut être reçu par une unité de réception (18) reliée à un microprocesseur (19).

10. Système d'étanchéité selon la revendication 9, **caractérisé en ce que** le générateur de signal (11), l'unité de réception (18) et le servomoteur (17) sont des membres d'un circuit de réglage fermé.
